# EUROPEAN PATENT SPECIFICATION

(11) **EP 1 694 050 B1**
(45) Date of publication and mention of the grant of the patent: **18.04.2012**
(21) Application number: 06003438.6
(22) Date of filing: 20.02.2006
(51) Int. Cl.: H04N 1/08

(54) **Inner drum-type image forming apparatus**
Innentrommel-Bilderzeugungsvorrichtung
Dispositif de formation d'image du type interne à tambour

(30) Priority: 21.02.2005 JP 2005044164
(43) Date of publication of application: 23.08.2006
(73) Proprietor: FUJIFILM Corporation, Minato-ku Tokyo (JP)
(72) Inventor: Kato, Yoshinori, Kasei-machi Ashigarakami-gun Kanagawa (JP); Matsuoka, Hiroshi, Kasei-machi Ashigarakami-gun Kanagawa (JP)
(74) Representative: Klunker, Hans-Friedrich

(56) References cited:
- EP-A- 0 883 279
- US-A- 5 500 656
- US-A- 5 576 754
- US-B1- 6 254 091
- PATENT ABSTRACTS OF JAPAN vol. 1997, no. 01, 31 January 1997 (1997-01-31) & JP 08 242340 A (DAINIPPON SCREEN MFG CO LTD), 17 September 1996 (1996-09-17)

## Description

### BACKGROUND OF THE INVENTION

### Field of the Invention

The present invention relates to an inner drum-type image forming apparatus according to the preamble of claim 1. Such apparatus conducts scanning/exposure, with a spinner mirror device, on a thin plate-like recording medium disposed on, such that it is tightly adhered to, an inner peripheral surface of an inner drum.

### Description of the Related Art

Photosensitive printing plates (PS plates) are commonly used in offset printing. And in the field of planography, computer-to-plate (CTP) systems have come into practical use. CTP systems manufacture direct printing plates by receiving an unexposed photosensitive printing plate fed thereto, conducting laser exposure processing using an inner drum-type image forming apparatus on the basis of digital data from a computer or the like, and conducting developing processing in which the latent image formed on the photosensitive printing plate is converted to an overt image by an automatic developer.

The inner drum-type image forming apparatus conducts main scanning in the radial direction of the inner drum by causing a light deflector, which deflects a light beam modulated on the basis of image information, to rotate at a constant speed around the light axis of the light beam, and conducts sub-scanning by causing the light deflector to move at a constant speed along the light axis (center axis direction of the inner drum), whereby an image is formed on the thin plate-like (sheet-like) recording medium loaded such that it is tightly adhered to the inner peripheral surface of the inner drum. Thus, it is required for the inner drum-type image forming apparatus to conduct scanning/exposure while maintaining the state where the light beam for image recording is focused on the surface of the thin plate-like recording medium disposed on the inner peripheral surface of the inner drum.

PS plates of various dimensions are used in the field of planography. With respect to these, it is required for the inner drum-type image forming apparatus to conduct scanning/exposure while maintaining a state where the light beam can be precisely focused on the surface of the recording medium, by disposing PS plates formed in various dimensions such that they are tightly adhered to the inner peripheral surface of the inner drum.

For this reason, in conventional inner drum-type image forming apparatus, a vacuum suction unit has been proposed for disposing PS plates of all dimensions such that they are tightly adhered to the inner peripheral surface of the inner drum. In the vacuum suction unit, vacuum grooves are intermittently formed in the circumferential direction of the inner drum to configure plural independent suction areas in the inner drum portion, and pipes are coupled to the vacuum grooves of these suction areas, whereby vacuum leaks are prevented and vacuum suction is conducted by suction areas selected in accordance with the dimension of the PS plate. When a PS plate of a certain dimension is to be sucked to the inner surface, the vacuum suction unit selects the optimum suction area from among the plural suction areas in accordance with the dimension of the PS plate, and vacuum-sucks the PS plate via the vacuum grooves inside the selected suction area (e.g., see Japanese Utility Model Application Publication No. 7-39165).

Moreover, in conventional inner drum-type image forming apparatus, a unit has been proposed where a squeegee roller is brought into rolling contact with the surface of the PS plate in order to ensure that the PS plate is pressed against the surface of the inner drum leaving no space between them (e.g., see Japanese Patent Application Publication No. 8-242340).

Also, in conventional inner drum-type image forming apparatus, a part has been proposed which is configured to change the cross-sectional shapes of suction grooves disposed along the circumferential direction of the inner drum to make the suction force uniform (e.g., see United States Patent No. 6,254,091).

However, in such inner drum-type image forming apparatus, when the vacuum suction unit is configured to vacuum-suck the PS plate via the vacuum grooves inside the suction area selected in accordance with the dimension of the PS plate, it is necessary to use numerous valves in order for the vacuum suction unit to switch the flow path, and there is the problem that the inner drum-type image forming apparatus becomes expensive.

Also, in inner drum-type image forming apparatus, if part of the PS plate rises from the inner peripheral surface of the inner drum, the light beam can no longer be precisely focused on the part of the PS plate rising from the inner peripheral surface of the inner drum when the light beam modulated on the basis of image information is deflected by the light deflector to scan/expose the PS plate, and the image to be formed becomes out of focus.

Moreover, in inner drum-type image forming apparatus, it is conceivable to enlarge the focal point depth of the light beam in order to ensure that the light beam for scanning/exposure is brought into focus even when the PS plate has risen from the inner peripheral surface of the inner drum. However, because the beam diameter of the light beam must be enlarged in order to achieve this, a high-resolution image can no longer be formed on the PS plate.

An inner drum-type image forming apparatus according to the preamble of claim 1 is known from patent abstracts of Japan Vol. 1997, No 01, 31 January 1997 & JP 08 242340 A. A recording medium is prevented from rising by a squeeze roller arranged on a rotating arm.

Moreover, US-A-5 576 754 discloses an inner drum-type image forming apparatus in which a light-sensitive film is prevented from using by a pressure roller disposed at a sheet entrance position of a cylinder-like member.

### SUMMARY OF THE INVENTION

In view of these problems, it is an object of the present invention to provide a new inner drum-type image forming apparatus that enables vacuum suction with a configuration that is simple and inexpensive, such that a thin plate-like recording medium of any size is tightly adhered onto the inner peripheral surface of the inner drum across the entire recording medium.

A first aspect of the invention provides an inner drum-type image forming apparatus that comprises the features of claim 1.

By configuring the inner drum-type image forming apparatus in this manner, the rise prevention device presses down, onto the inner peripheral surface of the inner drum, a range of the conveyance-direction trailing end portion of the recording medium where an image is not formed, whereby a state where the recording medium is tightly adhered onto the inner peripheral surface of the inner drum across the entire recording medium can be maintained. Thus, the light beam can be precisely focused on and scan/expose the recording medium that has been disposed such that it is tightly adhered onto the inner peripheral surface of the inner drum.

In the inner drum-type image forming apparatus a rise prevention device is attached to a push operation unit for loading the recording medium onto the inner peripheral surface of the inner drum.

By configuring the inner drum-type image forming apparatus in this manner, the rise prevention device can be moved by the push operation unit to a position at the conveyance-direction trailing end side of the recording medium loaded onto the inner peripheral surface of the inner drum. Thus, the configuration of the inner drum-type image forming apparatus can be made simple and manufactured inexpensively.

In the inner drum-type image forming apparatus of the first aspect, the rise may include plural retention members.

By configuring the inner drum-type image forming apparatus in this manner, points at the conveyance-direction trailing end portion of the recording medium loaded onto the inner peripheral surface of the inner drum are held down by the plural compact retention members of the rise prevention device, and the state where the recording medium is tightly adhered onto the inner peripheral surface of the inner drum across the entire recording medium can be maintained. Thus, the recording medium can be tightly adhered onto the inner peripheral surface of the inner drum across the entire recording medium by holding down just the plural necessary places of the conveyance-direction trailing end portion of the recording medium with the plural compact retention members of the rise prevention device, in comparison to, for example, an inner drum-type image forming apparatus configured such that the conveyance-direction trailing end portion of the recording medium is held down across its entire width by a large retention member extending across the entire width of the conveyance-direction trailing end portion of the recording medium. Therefore, the unnecessary portion of a large retention member extending across the entire width of the recording medium can be eliminated, and the retention members can be compacted.

In the inner drum-type image forming apparatus of the first aspect, the rise prevention device may include a retention member that is configured as a member with an integral structure extending across at least the entire width-direction length of the recording medium.

By configuring the inner drum-type image forming apparatus in this manner, the retention member of the rise prevention device stably holds down, without gap, the conveyance-direction trailing end portion of the recording medium loaded onto the inner peripheral surface of the inner drum across at least the entire width-direction length of the recording medium, and the state where the recording medium is tightly adhered onto the inner peripheral surface of the inner drum across the entire recording medium can be maintained.

In the inner drum-type image forming apparatus of the first aspect, the rise prevention device may include a retention member that is configured as a member with an integral structure extending across at least the entire width-direction length of the recording medium and having a length in the conveyance direction equal to at least a length including regions that rise easily at the conveyance-direction trailing end portion.

By configuring the inner drum-type image forming apparatus in this manner, the retention member of the rise prevention device becomes connected, such that airtightness is maintained, to the conveyance-direction trailing end edge of the recording medium loaded onto the inner peripheral surface of the inner drum extending across at least the entire width-direction length of the recording medium and across a length in the conveyance direction equal to at least a length including regions that rise easily at the conveyance-direction trailing end portion. That is, in this state, the retention member is integrally connected to the conveyance-direction trailing end edge of the recording medium, and the retention member blocks the vacuum suction-use grooves and maintains negative pressure inside the vacuum suction-use grooves such that outside air does not flow into the portions of the vacuum suction-use grooves corresponding to the position of the conveyance-direction trailing end portion of the recording medium. Consequently, the conveyance-direction trailing end of the recording medium is sucked by the vacuum suction-use grooves and prevented from rising. Thus, the recording medium becomes vacuum-sucked by the vacuum suction-use grooves across the entire recording medium and is tightly adhered onto the inner peripheral surface of the inner drum. In this state, easy-to-rise regions appear in the conveyance-direction trailing end portion of the retention member. Moreover, by configuring the inner drum-type image forming apparatus in this manner, the retention member does not cover the upper surface of the recording medium. Thus, the entire surface of the recording medium becomes exposable, and a margin-less image can be formed such that blank space is not created.

In the inner drum-type image forming apparatus of the first aspect, the rise may include a blocking member, and the blocking member may include stopper portions that block the vacuum suction-use grooves exposed at the conveyance-direction trailing end of the recording medium.

By configuring the inner drum-type image forming apparatus in this manner, the stopper portions of the blocking member of the rise prevention device block the vacuum suction-use grooves exposed at the conveyance-direction trailing end of the recording medium and prevent vacuum leaks, whereby the state where the recording medium loaded onto the inner peripheral surface of the inner drum is tightly adhered onto the inner peripheral surface of the inner drum across the entire recording medium can be maintained.

According to the inner drum-type image forming apparatus of the present invention, there is the effect that a sheet-like recording medium of any size can be vacuum-sucked, such that it is tightly adhered across the entire recording medium, onto the inner peripheral surface of the inner drum with a configuration that is simple and inexpensive.

### BRIEF DESCRIPTION OF THE DRAWINGS

FIG. 1 is a perspective view showing a computer-to-plate (CTP) system including an inner drum exposure apparatus pertaining to an embodiment of the invention;
FIG. 2 is an overall schematic configural view of the inside of the CTP system including the inner drum exposure apparatus pertaining to the embodiment of the invention;
FIG. 3 is a perspective view showing a part of the inner drum exposure apparatus pertaining to the embodiment of the invention;
FIG. 4 is a schematic front view showing a vacuum suction-use groove portion disposed in an inner drum of the inner drum exposure apparatus pertaining to the embodiment of the invention;
FIG 5 is a schematic explanatory view showing a state where a PS plate is conveyed by a push bar disposed on the inner drum of the inner drum exposure apparatus pertaining to the embodiment of the invention, and including a unit that prevents part of the PS plate from rising;
FIG. 6 is a schematic explanatory view showing an operation of pulling back the push bar disposed on the inner drum of the inner drum exposure apparatus pertaining to the embodiment of the invention, and including the unit that prevents part of the PS plate from rising;
FIG. 7 is a schematic explanatory view showing a state where the PS plate is held down on an inner peripheral surface of the inner drum by the unit that prevents part of the PS plate from rising and is disposed on the push bar disposed on the inner drum of the inner drum exposure apparatus pertaining to the embodiment of the invention;
FIG. 8 is a schematic explanatory view showing a state where the PS plate is held down on the inner peripheral surface of the inner drum by a retention member with an integral structure extending across at least the entire width-direction length of the PS plate in the unit that prevents part of the PS plate from rising and is disposed on the push bar disposed on the inner drum of the inner drum exposure apparatus pertaining to the embodiment of the invention;
FIG. 9 is a schematic explanatory view showing a state where the PS plate is held down on the inner peripheral surface of the inner drum by a retention member with an integral structure having a predetermined width in a conveyance direction in the unit that prevents part of the PS plate from rising and is disposed on the push bar disposed on the inner drum of the inner drum exposure apparatus pertaining to the embodiment of the invention;
FIG. 10 is a schematic explanatory view showing a state where the vacuum suction-use grooves are blocked off at a conveyance-direction trailing end of the vacuum-sucked PS plate by a blocking member in the unit that prevents part of the PS plate from rising and is disposed on the push bar disposed on the inner drum of the inner drum exposure apparatus pertaining to the embodiment of the invention; and
FIGS. 11A, 11B, and 11C are schematic explanatory views showing a state where the PS plate is conveyed by the push bar disposed in the inner drum of the inner drum exposure apparatus pertaining to the embodiment of the invention.

### DETAILED DESCRIPTION OF THE INVENTION

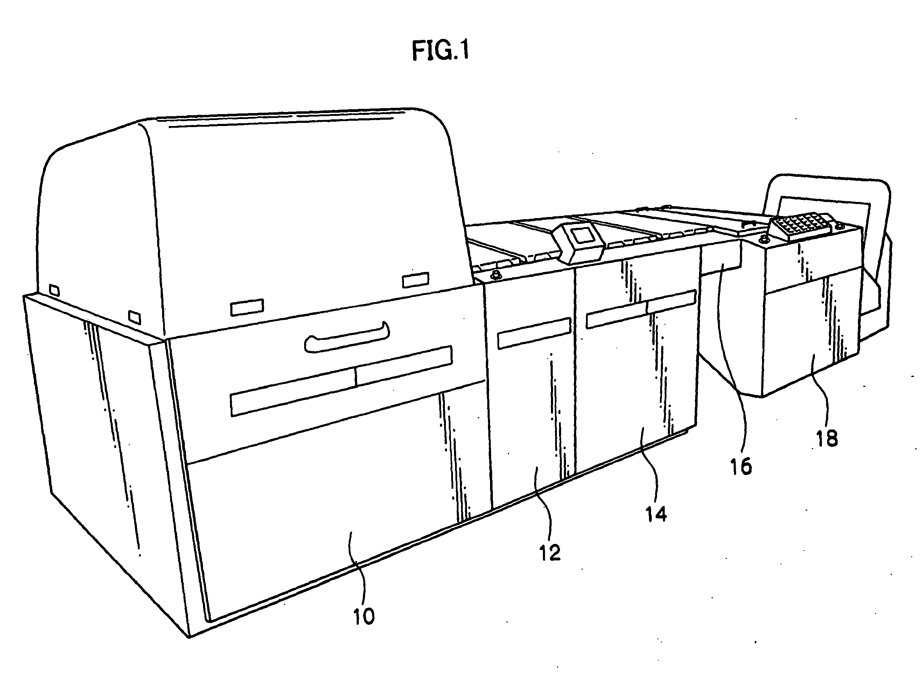

An embodiment relating to an inner drum-type image forming apparatus of the invention will be described with reference to FIGS. 1 to 10. The inner drum-type image forming apparatus pertaining to this embodiment is suitably used in a computer-to-plate (CTP) system that manufactures a direct printing plate by using photosensitive planography plates (PS plates) for offset printing as a thin plate-like recording medium, conducting laser exposure processing on the basis of digital data from a computer or the like, and conducting developing processing in which latent images formed on the photosensitive offset printing plates are converted to overt images.

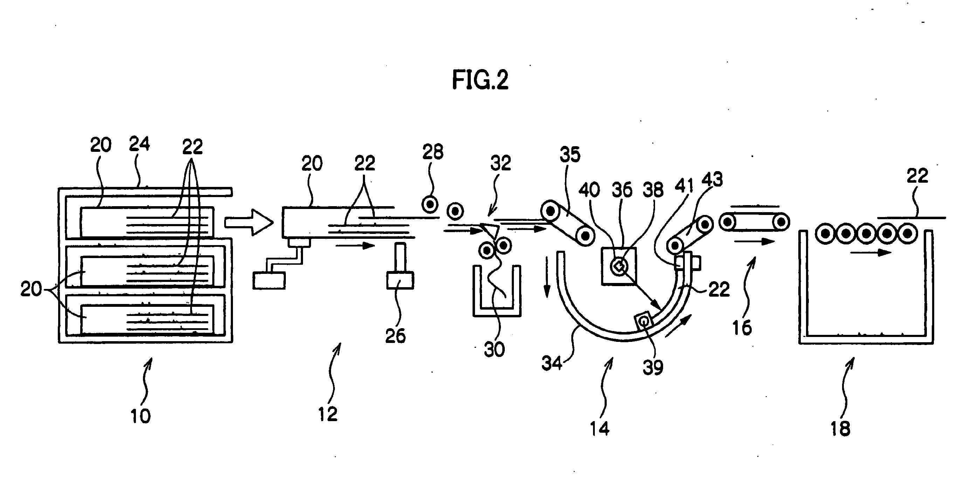

FIGS. 1 and 2 show the schematic configuration of a CTP system including the inner drum-type image forming apparatus (inner drum exposure apparatus) pertaining to the present embodiment.

The CTP system includes: an automatic feeding apparatus 10 with printing plate feeding cassettes 20 (shown in FIG. 2); a sheet feeding apparatus 12 that separates and feeds, one plate at a time, PS plates 22, which are photosensitive planography plates (thin plate-like recording mediums) disposed inside the printing plate feeding cassettes 20; an inner drum exposure apparatus 14; a buffer apparatus 16; and a development apparatus 18.

The CTP system can use, as thin plate-like recording media to be exposed, for example, PS plates comprising an image recording layer including a photosensitive material formed on a support that is a thin aluminium plate, photopolymer plates, silver salt-type photosensitive material or the like.

As shown in FIG. 2, the automatic feeding apparatus 10 in the CTP system stores, on a storage shelf 24, the plural printing plate feeding cassettes 20 that a worker has conveyed thereto from the outside, and feeds a desired printing plate feeding cassette 20 to the sheet feeding apparatus 12.

The sheet feeding apparatus 12 opens the lid of the fed printing plate feeding cassette 20 inside the apparatus, which is shielded from light, lifts up the bundle of the PS plates 22 accommodated inside the printing plate feeding cassette 20 with a lift-up mechanism 26, separates the PS plates 22 one plate at a time with a separation roller 28, and feeds the PS plates 22 to the inner drum exposure apparatus 14, which is an inner drum-type image forming apparatus. The sheet feeding apparatus 12 also includes a slip sheet removal unit 32 that separates and stocks slip sheets 30 that have been inserted between the stacked PS plates 22 in order to protect photosensitive surfaces of the PS plates 22.

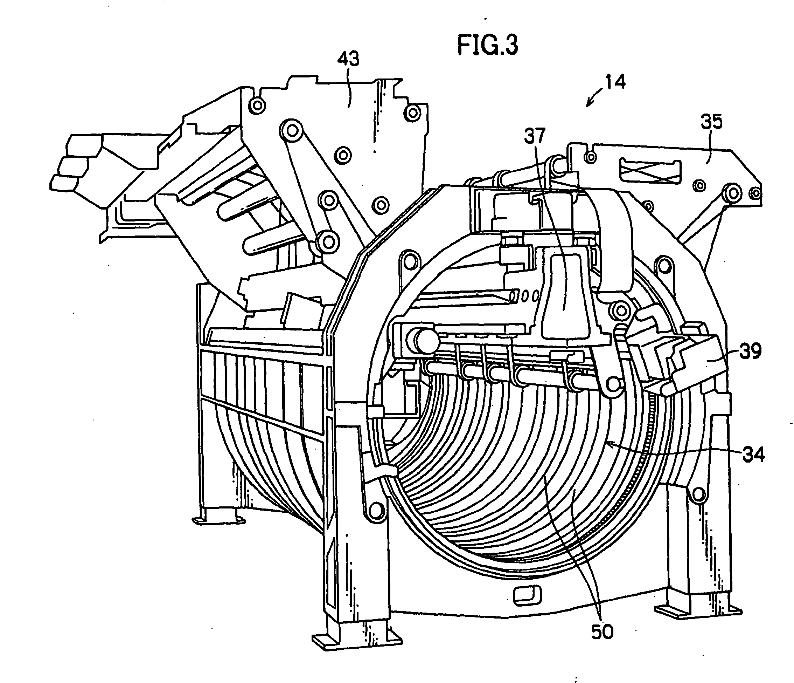

As shown in FIGS. 2 and 3, the inner drum exposure apparatus 14 in the CTP system is configured using, as a parent material, an inner drum 34 whose inner peripheral surface is formed in a circular arc (shape configuring part of the inner peripheral surface of a circular cylinder). The PS plate 22, which is an unrecorded recording medium, is introduced to the inside of the inner drum 34 by a conveyance module 35, moved in the circumferential direction of the inner drum 34 by a push bar 39 (the details of which will be described later) serving as a push operation unit, and loaded such that the leading end edge of the PS plate 22 strikes a positioning pin 41 and is positioned. Then, the PS plate 22 is retained in a state where it is reliably tightly adhered onto the inner peripheral surface of the inner drum 34 by a later-described vacuum suction unit, and exposure is conducted in this retained state.

In the inner drum exposure apparatus 14, a spinner mirror device 36 serving as a light beam deflector is disposed at a position in the center of the circular arc of the inner drum 34 in order to expose the PS plate 22. In the spinner mirror device 36, a reflective surface (spinner mirror) 38 is disposed on a leading end a rotating shaft 40. The reflective surface 38 may be configured by, for example, a prism member (a triangular right-angle prism, a cubic prism, a bowl prism or the like) that is a reflective mirror member.

The spinner mirror device 36 is configured to conduct exposure by using a motor rotated at a high speed (e.g., 10,000 rpm or more) by an unillustrated controller to cause the rotating shaft 40 disposed with the reflective surface 38 to rotate. For this reason, the spinner mirror device 36 is disposed such that the center axis of rotation of the rotating shaft 40 coincides with the center axis of the circular arc of the inner drum 34.

In the spinner mirror device 36, a light beam projected from an optical system of a light source is reflected on the rotating reflective surface 38, and scans and exposes the photosensitive surface of the photosensitive printing plate 10 in a main scanning direction.

The spinner mirror device 36 is disposed on a movement operation-use beam 37 such that its movement is controllable (see FIG. 3) and sub-scans the PS plate 22 as the result of the movement of the spinner mirror device 36 being controlled at a uniform velocity in the axial line direction (direction passing from the front side of FIG. 2 to the back side) of the center axis of the circular arc of the inner drum 34 by an unillustrated sub-scanning moving unit.

The spinner mirror device 36 configured in this manner causes the light beam projected from the optical system of the light source and modulated in accordance with image information to be reflected on the rotating reflective surface 38 to conduct scanning/exposure in the main scanning direction. While the spinner mirror device 36 conducts scanning/exposure, it is moved in the sub-scanning direction, whereby processing that records a two-dimensional image on the entire recording surface (photosensitive surface) of the PS plate 22 is conducted.

The PS plate 22 exposed by the inner drum exposure apparatus 14 in this manner is conveyed from the inner drum 34 to the buffer apparatus 16 by a conveyance module 43. The buffer apparatus 16 conveys the exposed PS plate 22 into the development apparatus 18 at a required timing by adjusting the conveyance speed.

The development apparatus 18 completes the manufacture of the printing plate by developing the exposed PS plate 22 conveyed thereto to make the latent image overt.

Next, the unit disposed on the inner peripheral surface of the inner drum 34 of the inner drum exposure apparatus 14 in order to vacuum-suck the PS plate 22 will be described.

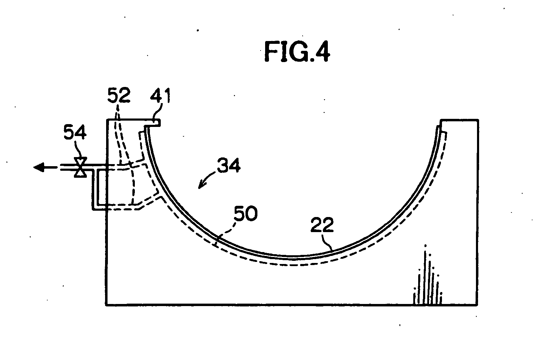

As shown in FIG. 4, in the inner drum exposure apparatus 14, vacuum suction-use grooves 50 are punched in the inner peripheral surface portion of the inner drum 34 in order to vacuum-suck the PS plate 22. The vacuum suction-use grooves 50 are punched parallel to each other along the circumferential direction (PS plate 22 conveyance direction) of the inner drum 34 across a range in which PS plates 22 of various sizes are disposed on the inner peripheral surface portion of the inner drum 34.

Plural (two in the present embodiment) vacuum suction holes 52 are disposed in the inner drum 34 such that they are communicated with the bottom portions of the vacuum suction-use grooves 50 at predetermined positions at the leading end side. An unillustrated vacuum pump is connected to the vacuum suction holes 52 via a valve 54. When the vacuum pump is driven and the valve 54 is opened, air is sucked in from the vacuum suction-use grooves 50 through the vacuum suction holes 52.

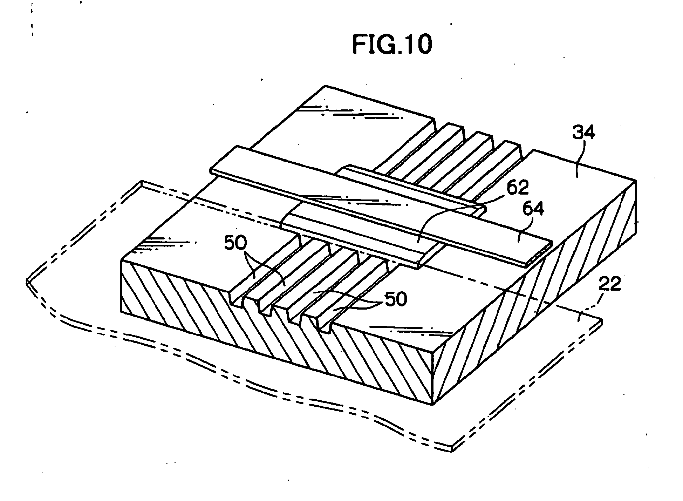

Moreover, the vacuum suction-use grooves 50 are formed in cross-sectional shapes (e.g., the substantial "U" cross-sectional shapes shown in FIG. 10) where suction force that can sufficiently pull and retain the PS plate 22 on the inner peripheral surface of the inner drum 34 is caused to act across the entire longitudinal-direction lengths of the vacuum suction-use grooves 50 in a state where air is sucked in from the vacuum suction holes 52 and the open portions of the grooves of the vacuum suction-use grooves 50 are blocked by the PS plate 22.

Also, in the inner drum 34, when the PS plate 22 is vacuum-sucked by the vacuum suction-use grooves 50, the pressure inside the vacuum suction-use grooves 50 abruptly rises due to vacuum leakage (open to atmospheric pressure) occurring because the vacuum suction-use grooves 50 are open at the conveyance-direction trailing end of the PS plate 22.

At this time, in the PS plate 22, the vacuum suction force trying to pull the PS plate 22 against the inner peripheral surface of the inner drum 34 becomes weaker further away from the vacuum suction holes 52, and further away from the vacuum suction-use grooves 50 toward the ends of the PS plate 22. Thus, it becomes easy for the conveyance-direction trailing end portion, particularly both corner portions, of the PS plate 22 to rise from the inner peripheral surface of the inner drum 34.

Moreover, when the vacuum suction force trying to pull the PS plate 22 against the inner peripheral surface of the inner drum 34 becomes weaker, sometimes the elastic restoring force of the PS plate 22 becomes stronger when the PS plate 22 comprises a thick aluminium plate and the PS plate 22 has become curled as a result of being stored over a long period of time, the vacuum suction force trying to pull the PS plate 22 to the inner peripheral surface of the inner drum 34 is overcome such that part of the PS plate 22 can no longer be tightly adhered to the inner peripheral surface of the inner drum 34, and the PS plate 22 rises.

Thus, the inner drum exposure apparatus 14 includes a unit (a unit for conformance) that prevents part of the PS plate 22 vacuum-sucked onto the inner peripheral surface of the inner drum 34 from rising.

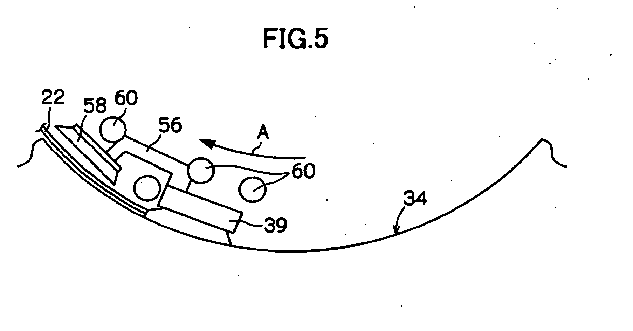

As shown in, for example, FIGS. 5 to 7, the unit that prevents part of the PS plate 22 vacuum-sucked onto the inner peripheral surface of the inner drum 34 from rising can be disposed on a push bar 39 for loading the PS plate 22 onto the inner peripheral surface of the inner drum 34. That is, in the unit shown in FIGS. 5 to 7 that prevents the PS plate 22 from rising, a rise prevention device that prevents the conveyance-direction trailing end portion of the PS plate 22 from rising is attached to the push bar 39.

The rise prevention device is configured by axially attaching the base end portion of an operation arm 56, which has an inverted "U" shape when seen in side view, to a predetermined position on the push bar 39 serving as a push operation unit, and disposing a retention member 58 that holds down the PS plate 22 on the free end portion of the operation arm 56. For the retention member 58, for example, a member comprising a flexible material such as rubber formed in a small rectangular tabular shape can be used.

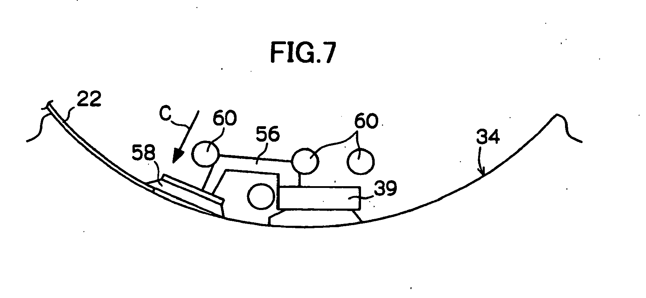

The rise prevention device is configured such that its movement is controllable between the withdrawn position shown in FIG. 5, at which the retention member 58 is separated from the surface of the PS plate 22, and the holding position shown in FIG. 7, at which the retention member 58 pressingly contacts the end portion (in a range where an image is not formed) of the PS plate 22, as a result of the operation arm 56 being operated by an unillustrated operation mechanism such as an actuator.

In the unit shown in FIGS. 5 to 7 that prevents the PS plate 22 from rising, compact retention members 58 are plurally disposed to configure the rise prevention device.

The push bar 39 to which the rise prevention device is attached includes, at its rear portion facing the center side of the inner drum 34 (upper side of the push bar 39 in FIG. 5), conveyance rollers 60 that rollingly contact the PS plate 22 introduced from the conveyance module 35 and guide the PS plate 22 onto the inner peripheral surface of the inner drum 34.

In the inner drum exposure apparatus 14 including the unit shown in FIGS. 5 to 7 that prevents the PS plate 22 from rising, the PS plate 22 is set onto the inner peripheral surface of the inner drum 34 by the following procedure.

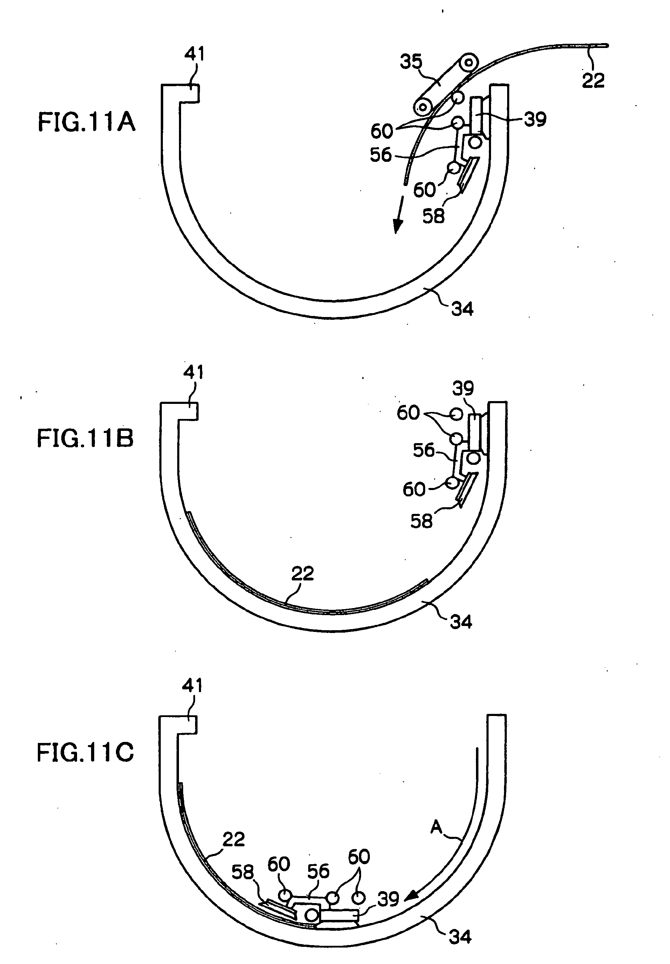

First, as shown in FIG. 11A, in the inner drum exposure apparatus 14, the PS plate 22 is guided to the conveyance rollers 60 by the conveyance module 35. Then, as shown in FIG. 11B, the PS plate 22 is introduced to, such that it is placed on, the inner peripheral surface of the inner drum 34.

Next, as shown in FIG. 11C, in the inner drum exposure apparatus 14, the push bar 39 is operated to be moved, whereby the conveyance-direction leading end portion of the push bar 39 pushes against the conveyance-direction trailing end portion of the PS plate 22. The push bar 39 is moved in the conveyance direction, represented by arrow A in FIG. 11C, along the inner peripheral surface of the inner drum 34, and conveys the PS plate 22 to the side of the positioning pin 41.

Next, as shown in FIG. 4, the PS plate 22 conveyed by the push bar 39 as described above is conveyed until its conveyance-direction leading end portion strikes the positioning pin 41, whereby the PS plate 22 is positioned. Thereafter, in the inner drum exposure apparatus 14, the valve 54 is opened, the vacuum pump is driven, and air is sucked in from the vacuum suction-use grooves 50 via the vacuum suction holes 52, whereby the PS plate 22 covering the open portions of the vacuum suction-use grooves 50 is pulled onto the inner peripheral surface of the inner drum 34 and retained such that the position at which it has been positioned does not shift.

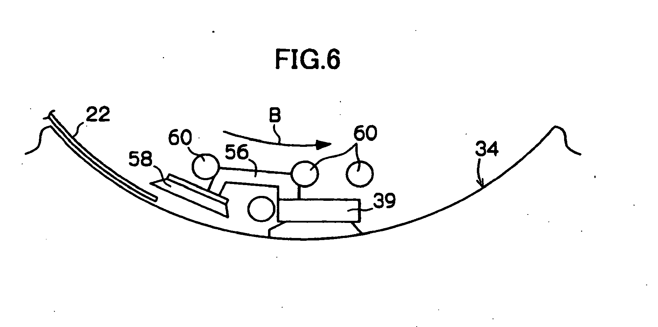

Next, as shown in FIG. 6, the push bar 39 is pulled back a predetermined distance in the direction opposite to the conveyance direction and represented by arrow B, and the leading end portions of the retention members 58 are stopped at a position above the conveyance-direction trailing end portion of the PS plate 22 where an image is not recorded.

Next, as shown in FIG. 7, the operation arm 56 is driven and controlled, whereby the retention members 58 are lowered onto the inner peripheral surface of the inner drum 34 as represented by arrow C. The retention members 58 are caused to pressingly contact the range of the conveyance-direction trailing end portion of the PS plate 22 where an image is not formed (e.g., the blank margin set around the image), whereby the retention members 58 press the PS plate 22 onto the inner peripheral surface of the inner drum 34, and the state where the entire PS plate 22 is tightly adhered to the inner peripheral surface of the inner drum 34 is maintained.

In particular, by configuring the inner drum exposure apparatus 14 including the unit shown in FIGS. 5 to 7 that prevents the PS plate 22 from rising such that both corner portions of the conveyance-direction trailing end of the PS plate, which rise significantly when the PS plate 22 is vacuum-sucked to the inner side surface of the inner drum 34, are pressed onto the inner peripheral surface of the inner drum 34 by the retention members 58, a large effect is obtained because the PS plate 22 is prevented from partially rising from the inner peripheral surface of the inner drum 34.

Moreover, when the inner drum exposure apparatus 14 including the unit shown in FIGS. 5 to 7 that prevents the PS plate 22 from rising is configured such that the retention members 58 press the conveyance-direction trailing end portion of the PS plate 22 onto the inner peripheral surface of the inner drum 34 and such that the retention members 58 partially block the open portions of the vacuum suction-use grooves 50 continuing from the conveyance-direction trailing end portion of the PS plate 22, air flows into the vacuum suction-use grooves 50 from a position away from the conveyance-direction trailing end of the PS plate 22. Thus, the suction force acting on the conveyance-direction trailing end portion of the PS plate 22 does not become weak, and the state where the entire PS plate 22 is tightly adhered onto the inner peripheral surface of the inner drum 34 can be better maintained. Also, the unit that prevents the PS plate 22 from rising can be applied to PS plates 22 of any size.

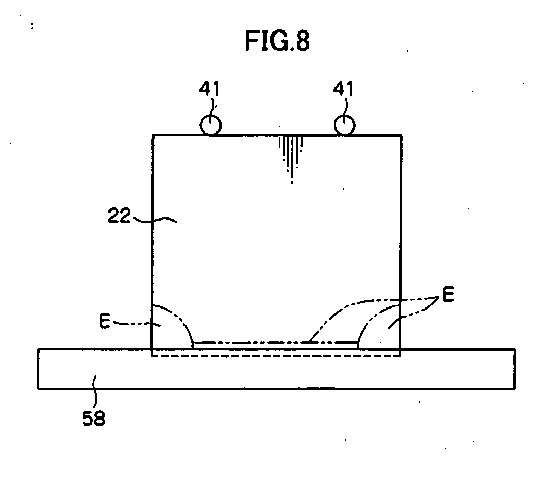

Next, another configural example of the inner drum exposure apparatus 14 including the unit that prevents the PS plate 22 from rising will be described with reference to FIG. 8.

In the inner drum exposure apparatus 14 including the unit shown in FIG. 8 that prevents the PS plate 22 from rising, the retention member 58 is configured as a member with an integral structure that extends across at least the entire width-direction (direction orthogonal to the conveyance direction) length of the PS plate 22.

The retention member 58 configured in the integral structure shown in FIG. 8 is configured such that it is operated to be moved by one or several operation arms 56. Additionally, the retention member 58 configured in the integral structure shown in FIG. 8 continuously presses the entire conveyance-direction trailing end edge of the PS plate 22 when the retention member 58 is lowered onto the inner peripheral surface of the inner drum 34 and presses the conveyance-direction trailing end portion of the PS plate 22 onto the inner peripheral surface of the inner drum 34. Thus, a large effect is obtained in the view of preventing the conveyance-direction trailing end portion of the PS plate 22 from partially rising from the inner peripheral surface of the inner drum 34.

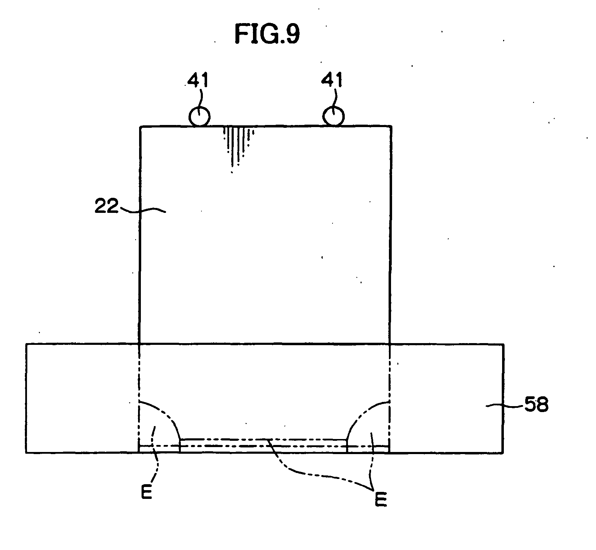

Next, another configural example of the inner drum exposure apparatus 14 including the unit that prevents the PS plate 22 from rising will be described with reference to FIG. 9.

In the inner drum exposure apparatus 14 including the unit shown in FIG. 9 that prevents the PS plate 22 from rising, the retention member 58 is configured as a flat plate-like member with an integral structure that has a predetermined width in the conveyance direction and extends across at least the entire width-direction (direction orthogonal to the conveyance direction) length of the PS plate 22.

Also, regions E (represented by the 3-dot chain lines in FIG. 9), for example, which easily rise at the conveyance-direction trailing end portion when the PS plate 22 is vacuum-sucked without disposing the retention member 58, arise because the vacuum suction force trying to pull the PS plate 22 onto the inner peripheral surface of the inner drum 34 becomes weaker further away from the vacuum suction holes 52, and further away from the vacuum suction holes 52 towards the ends of the PS plate 22, because the pressure inside the vacuum suction-use grooves 50 abruptly rises due to vacuum leakage (open to atmospheric pressure) in the vacuum suction-use grooves 50 from the conveyance-direction trailing end of the PS plate 22 on. Thus, there is a tendency for the regions which easily rise to widely widen at the conveyance-direction trailing end portion, and particularly at both corner portions, of the PS plate 22.

Thus, in the inner drum exposure apparatus 14 including the unit shown in FIG. 9 that prevents the PS plate 22 from rising, the regions E (represented by hypothetical lines in FIG. 9) that easily rise at the conveyance-direction trailing end portion of the retention member 58 are measured in advance by experiment or the like when the maximum width size PS plate 22 is vacuum-sucked in a state where the retention member 58 formed in the same width size as the maximum width size PS plate 22 (the PS plate 22 represented by solid lines in FIG. 9 is one whose width-direction size is small in comparison to the maximum width size PS plate) is connected to the conveyance-direction trailing end of the PS plate 22, and the retention member 58 is configured as a flat plate-like member having an appropriate size including at least the easy-to-rise regions E.

Although not illustrated, the retention member 58 configured in a flat plate-like member with an integral structure shown in FIG 9 is configured such that it is operated to be moved by one or several operation arms 56.

Additionally, in the inner drum exposure apparatus 14 including the unit shown in FIG. 9 that prevents the PS plate 22 from rising, the operation arm 56 is driven and controlled, whereby the retention member 58 is lowered until it contacts the inner peripheral surface of the inner drum 34, and the conveyance-direction leading end edge of the retention member 58 is set such that it tightly contacts and presses the entire length of the conveyance-direction trailing end edge of the PS plate 22. By setting the retention member 58 in this manner, the entire length of the PS plate 22 in the conveyance direction is extended continuously by the size of the retention member 58.

Thus, when the PS plate 22 is vacuum-sucked, the easy-to-rise regions of the integrally connected PS plate 22 and retention member 58 move away from the PS plate 22 toward the conveyance-direction trailing end portion of the retention member 58.

For this reason, in the inner drum exposure apparatus 14 including the unit shown in FIG. 9 that prevents the PS plate 22 from rising, the vacuum-sucked PS plate 22 can be retained in a state where the entire PS plate 22 is tightly adhered to the inner peripheral surface of the inner drum 34.

When the retention member 58 is configured in this manner, the retention member 58 does not cover the upper surface of the PS plate 22. Thus, the entire surface of the PS plate 22 becomes exposable, and a margin-less image can be formed such that blank space is not created.

In the inner drum exposure apparatus 14 including the unit shown in FIG. 9 that prevents the PS plate 22 from rising, the suction force at the portions of the easy-to-rise regions E of the retention member 58 becomes weak when the PS plate 22 is vacuum-sucked, but no problems arise because this is not involved in exposure.

Next, yet another configural example of the inner drum exposure apparatus 14 including the unit that prevents the PS plate 22 from rising will be described with reference to FIG. 10.

In the inner drum exposure apparatus 14 including the unit shown in FIG. 10 that prevents the PS plate 22 from rising, when the PS plate 22 is vacuum-sucked, the vacuum suction-use grooves 50 exposed at the conveyance-direction trailing end of the PS plate 22 are blocked by a blocking member 62, whereby vacuum leakage is prevented, the suction force resulting from the air inside the vacuum suction-use grooves 50 being sucked is maintained, and the PS plate 22 becomes appropriately retainable on the inner peripheral surface of the inner drum 34.

The entire blocking member 62 is formed in a substantially rectangular shape when seen in plan view by an elastic material such as rubber. The blocking member 62 includes a flat portion, which is tightly adhered to the inner peripheral surface of the inner drum 34, and stopper portions, which are disposed such that they protrude like the teeth of a comb from the flat portion and fit into the vacuum suction-use grooves 50 such that the gaps between them become sufficiently small.

The blocking member 62 configured in this manner is attached, by adhesion or the like, to a support member 64 formed in a long plate-like shape. When the vacuum suction-use grooves 50 are arranged such that they are distributed in plural regions in the inner peripheral surface of the inner drum 34, plural blocking members 62 are arranged in a predetermined plural number of places corresponding to the plural regions of the vacuum suction-use grooves 50.

Also, although not illustrated, the blocking member 62 is attached to the free end portion of the operation arm 56 attached to the push bar 39, and configured such that it is operated to be moved by one or several operation arms 56.

Additionally, in the inner drum exposure apparatus 14 including the unit shown in FIG. 10 that prevents the PS plate 22 from rising, the operation arm 56 is driven and controlled, whereby the flat portion of the support member 64 is tightly adhered to the inner peripheral surface of the inner drum 34 and the stopper portions of the support member 64 are fitted into the vacuum suction-use grooves 50 without gaps therebetween. Moreover, in the inner drum exposure apparatus 14, the conveyance-direction leading end edge of the support member 64 is configured to tightly contact the conveyance-direction trailing end edge of the PS plate 22 such that airtightness is maintained.

By configuring the inner drum exposure apparatus 14 in this manner, the vacuum suction-use grooves 50 disposed in the inner peripheral surface of the inner drum 34 prevent vacuum leakage with the PS plate 22 and the stopper portions of the blocking member 62. Thus, the PS plate 22 vacuum-sucked to the inner peripheral surface of the inner drum 34 is retained in a state where the entire PS plate 22 is tightly adhered to the inner peripheral surface of the inner drum 34.

Moreover, when the inner drum exposure apparatus 14 is configured in this manner, the blocking member 62 does not cover the upper surface of the PS plate 22. Thus, the entire surface of the PS plate 22 becomes exposable, and a margin-less image can be formed such that blank space is not created.

Naturally, the unit that prevents the PS plate 22 from rising can be applied to PS plates 22 of any size.

Also, in the inner drum exposure apparatus 14 including the unit configured as described above that prevents the PS plate 22 from rising, the state where the entire PS plate 22 is appropriately sucked and tightly adhered onto the drum can be maintained even if the diameter of the light beam for conducting exposure is reduced and the focal point depth becomes shallow. Thus, a highly precise image can be formed by conducting image formation with a scan-use light beam whose beam diameter is small.

The units shown in FIG. 9 and FIG. 10 that prevent the PS plate 22 from rising may also be configured integrally with the push bar 39.

## Claims

1. An inner drum-type image forming apparatus that retains a thin plate-like recording medium (22) on an inner peripheral surface formed in an inner drum (34) and records an image by deflecting a light beam modulated in accordance with image information, with a light deflector (36), and conducting scanning/exposure, the inner drum-type image forming apparatus comprising:
vacuum suction-use grooves (50) plurally punched in, such that they run along the circumference of the inner peripheral surface portion of the inner drum; and
vacuum suction holes (52) punched such that the holes (52) communicate with a conveyance-direction leading end side of the recording medium (22) in the vacuum suction-use grooves (50) and suck in air; **characterized by**
a rise prevention device (58) that holds down a conveyance-direction trailing end portion of the recording medium (22) on the inner peripheral surface of the inner drum (34) in a state where the recording medium is vacuum-sucked onto the inner peripheral surface of the inner drum (34), and
a push operation unit (39) for loading the recording medium (22) onto the inner peripheral surface of the inner drum (34), wherein the rise prevention device (58) is attached to the push operation unit (39).

2. The inner drum-type image forming apparatus of claim 1 wherein the rise prevention device includes plural retention members (58), and the retention members (58) hold down the conveyance-direction trailing end portion of the recording medium (22) onto the inner peripheral surface of the inner drum (34).

3. The inner drum-type image forming apparatus of claim 1, wherein the rise prevention device includes a retention member (58), which is configured as a member with an integral structure extending across at least the entire width-direction length of the recording medium (22).

4. The inner drum-type image forming apparatus of claim 1, wherein the rise prevention device includes a retention member (58), which is configured as a member with an integral structure extending across at least the entire width-direction length of the recording medium (22) and having a length in the conveyance direction equal to at least a length including regions that rise easily at the conveyance-direction trailing end portion.

5. The inner drum-type image forming apparatus of claim 1, wherein the rise prevention device includes a blocking member (62), and the blocking member (62) includes stopper portions that block the vacuum suction-use grooves exposed at the conveyance-direction trailing end of the recording medium (22).

6. The inner drum-type image forming apparatus of claim 1, further comprising an operation arm (56) that couples together the rise prevention device (58) and the push operation unit (39), wherein the operation arm (56) is adapted to move the rise prevention device (58) between a position at which the rise prevention device holds down the recording medium (22) onto the inner peripheral surface of the inner drum and a position at which the rise prevention device is separated from the surface of the recording medium (22).

7. The inner drum-type image forming apparatus of any one of claims 2 to 4, wherein the retention member (58) includes flexible material.

8. The inner drum-type image forming apparatus of any one of claims 2 to 5, wherein the retention member (58) is formed in a flat plate-like shape.

9. The inner drum-type image forming apparatus of claim 5, wherein the blocking member (62) includes an elastic material.

## Patentansprüche

1. Bilderzeugungsvorrichtung vom Innentrommeltyp, die ein dünnes, flachstückartiges Aufzeichnungsmedium (22) auf einer Innenumfangsfläche hält, die in einer Innentrommel (34) gebildet ist, und ein Bild **dadurch** aufzeichnet, dass sie einen nach Maßgabe von Bildinformation modulierten Lichtstrahl mit einem Lichtablenker (36) ablenkt und eine Abtast-Belichtung vornimmt, wobei die Bilderzeugungsvorrichtung vom Innentrommeltyp aufweist:
Vakuumansaugnuten (50), die in einer Mehrzahl derart eingestanzt sind, dass sie entlang dem Umfang des Innenumfangsflächenabschnitts der Innentrommel verlaufen; und
Vakuumansauglöcher (52), die derart eingestanzt sind, dass die Löcher (52) mit einer in Transportrichtung vorne liegenden Endseite des Aufzeichnungsmediums (22) in den Vakuum-Ansaugnuten (50) kommunizieren und Luft ansaugen, **gekennzeichnet durch**
eine Abhebe-Verhinderungseinrichtung (54), die einen in Transportrichtung hinten liegenden Endabschnitt des Aufzeichnungsmediums (22) an der Innenumfangsfläche der Innentrommel (34) in einem Zustand niederhält, in welchem das Aufzeichnungsmedium gegen die Innenumfangsfläche der Innentrommel (34) **durch** Vakuum angesaugt wird, und eine Stoßbetätigungseinheit (39) zum Laden des Aufzeichnungsmediums (22) auf die Innenumfangsfläche der Innentrommel (34), wobei die Abhebe-Verhinderungseinrichtung (56 ,58) an der Stoßbetätigungseinheit (39) befestigt ist.

2. Vorrichtung nach Anspruch 1, bei der die Abhebe-Verhinderungseinrichtung eine Mehrzahl von Rückhalteelementen (58) enthält, und die Rückhalteelemente (58) den in Transportrichtung hinten liegenden Endabschnitt des Aufzeichnungsmediums (22) an der Innenumfangsfläche der Innentrommel (34) niederhalten.

3. Vorrichtung nach Anspruch 1, bei der die Abhebe-Verhinderungseinrichtung ein Rückhalteelement (58) enthält, welches als Element mit einer integralen Struktur ausgebildet ist, die sich über zumindest die gesamte Länge des Aufzeichnungsmediums (22) in dessen Breitenrichtung erstreckt.

4. Vorrichtung nach Anspruch 1, bei der die Abhebe-Verhinderungseinrichtung ein Rückhalteelement (58) enthält, welches konfiguriert ist als ein Element mit einer integralen Struktur, welche sich über zumindest die gesamte Breite des Aufzeichnungsmediums (22) erstreckt und eine Länge in Transportrichtung aufweist, die zumindest gleich ist einer Länge, welche Zonen enthält, die zum Abheben in dem in Transportrichtung hinten liegenden Endabschnitt neigen.

5. Vorrichtung nach Anspruch 1, bei der die Abhebe-Verhinderungseinrichtung ein Sperrelement (62) enthält, und das Sperrelement (62) Anschlagabschnitte enthält, welche die Vakuum-Ansaugnuten sperren, die an dem in Transportrichtung hinten liegenden Ende des Aufzeichnungsmediums (22) exponiert sind.

6. Vorrichtung nach Anspruch 1, weiterhin umfassend einen Betätigungsarm (56), der die Abhebe-Verhinderungseinrichtung (58) mit der Stoßbetätigungseinheit koppelt und ausgebildet ist zum Bewegen der Abhebe-Verhinderungseinrichtung (58) zwischen einer Stelle, an der die Abhebe-Verhinderungseinrichtung das Aufzeichnungsmedium (22) gegen die Innenumfangsfläche der Innentrommel niederhält, und einer Stelle, an der die Abhebe-Verhinderungseinrichtung von der Oberfläche des Aufzeichnungsmediums (22) abgerückt ist.

7. Vorrichtung nach einem der Ansprüche 2 bis 4, bei der das Rückhalteelement (58) ein flexibles Material enthält.

8. Vorrichtung nach einem der Ansprüche 2 bis 5, bei der das Rückhalteelement (58) flachstückartig ausgebildet ist.

9. Vorrichtung nach Anspruch 5, bei der das Sperrelement (62) einen elastischen Werkstoff enthält.

## Revendications

1. Dispositif de formation d'images du type à tambour intérieur qui retient un fin support d'enregistrement (22) en plaque sur une surface périphérique intérieure formée dans un tambour intérieur (34) et enregistre une image en déviant un faisceau lumineux modulé selon une information d'image, avec un déflecteur de lumière (36), et réalisant un balayage/exposition, le dispositif de formation d'images du type à tambour intérieur comprenant :
des rainures utilisées pour l'aspiration par vide (50) poinçonnées en plusieurs points, de telle manière qu'elles suivent le long de la circonférence de la partie de surface périphérique intérieure du tambour intérieur ; et
des trous d'aspiration par vide (52) poinçonnés de telle manière que les trous (52) communiquent avec un côté d'extrémité avant dans la direction de convoyage du support d'enregistrement (22) dans les rainures utilisées pour l'aspiration par vide (50) et aspirent l'air ; **caractérisé par**
un dispositif de prévention de montée (58) qui maintient vers le bas une partie d'extrémité arrière dans la direction de convoyage du support d'enregistrement (22) sur la surface périphérique intérieure du tambour intérieur (34) dans un état où lé support d'enregistrement est aspiré par vide sur la surface périphérique intérieure du tambour intérieur (34), et
une unité d'actionnement par poussée (39) pour charger le support d'enregistrement (22) sur la surface périphérique intérieure du tambour intérieur (34), dans lequel le dispositif de prévention de montée (58) est attaché à l'unité d'actionnement par poussée (39).

2. Dispositif de formation d'images du type à tambour intérieur selon la revendication 1, dans lequel le dispositif de prévention de montée inclut plusieurs éléments de retenue (58), et les éléments de retenue (58) maintiennent vers le bas la partie d'extrémité arrière dans la direction de convoyage du support d'enregistrement (22) sur la surface périphérique intérieure du tambour intérieur (34).

3. Dispositif de formation d'images du type à tambour intérieur selon la revendication 1, dans lequel le dispositif de prévention de montée inclut un élément de retenue (58), qui est configuré comme un élément avec une structure d'un seul bloc s'étendant à travers au moins toute la largeur du support d'enregistrement (22).

4. Dispositif de formation d'images du type à tambour intérieur selon la revendication 1, dans lequel le dispositif de prévention de montée inclut un élément de retenue (58), qui est configuré comme un élément avec une structure d'un seul bloc s'étendant à travers au moins toute la largeur du support d'enregistrement (22) et ayant une longueur dans la direction de convoyage égale à au moins une longueur incluant des régions qui montent facilement au niveau de la partie d'extrémité arrière dans la direction de convoyage.

5. Dispositif de formation d'images du type à tambour intérieur selon la revendication 1, dans lequel le dispositif de prévention de montée inclut un élément de blocage (62), et l'élément de blocage (62) inclut des parties d'arrêt qui bloquent les rainures utilisées pour l'aspiration par vide exposée au niveau de l'extrémité arrière dans la direction de convoyage du support d'enregistrement (22).

6. Dispositif de formation d'images du type à tambour intérieur selon la revendication 1, en outre comprenant un bras d'actionnement (56) pour coupler le dispositif de prévention de montée (58) avec la unité d'actionnement par poussée (39), le bras d'actionnement étant adapté pour déplacer le dispositif de prévention de montée (58) entre une position dans laquelle le dispositif de prévention de montée maintient vers le bas le support d'enregistrement (22) sur la surface périphérique intérieure du tambour intérieur et une position dans laquelle le dispositif de prévention de montée est séparé de la surface du support d'enregistrement (22).

7. Dispositif de formation d'images du type à tambour intérieur selon l'une quelconque des revendications 2 à 4, dans lequel l'élément de retenue (58) inclut un matériau flexible.

8. Dispositif de formation d'images du type à tambour intérieur selon l'une quelconque des revendications 2 à 5, dans lequel l'élément de retenue (58) est formé dans une forme en plaque plate.

9. Dispositif de formation d'images du type à tambour intérieur selon la revendication 5, dans lequel l'élément de blocage (62) inclut un matériau élastique.
